# EUROPEAN PATENT APPLICATION

(11) **EP 3 613 296 A1**
(43) Date of publication of application: **26.02.2020**
(21) Application number: 17906276.5
(22) Date of filing: 31.10.2017
(51) Int. Cl.: A23L 7/157, A23L 5/10

(54) **MIX FOR DEEP-FRIED FOOD**

(30) Priority: 19.04.2017 JP 2017082585
(71) Applicant: Nisshin Foods Inc., Tokyo 101-8441 (JP)
(72) Inventor: FUJIMURA, Ryosuke, Tokyo 103-8544 (JP); HIWATASHI, Souichiro, Tokyo 103-8544 (JP)
(74) Representative: Forstmeyer, Dietmar
(86) International application number: PCT/JP2017/039348
(87) International publication number: WO 2018/193655

(57) **Abstract**

A mix for fried food of the present invention contains 20 mass% or more of a high-fiber resistant starch having a dietary fiber content of 60 mass% or higher. The mix for fried food of the present invention is rich in dietary fiber and therefore beneficial as a healthy low-carb foodstuff and yet enables making fried food with the coating of which has a non-sticky, brittle, and crisp texture and also maintains such a pleasant texture even after an elapse of a certain period of time from the cooking or when reheated, e.g., in a microwave oven. Also disclosed are a batter containing 100 parts by mass of the mix and 100 to 1000 parts by mass of a liquid, and a method for making fried food including the steps of coating a food with the batter and cooking the coated food.

## Description

### Technical Field

This invention relates to a mix for fried food which is used as a coating material in making fried (either shallow or deep) food.

### Background Art

Deep- or shallow-fried foods (hereinafter simply "fried foods") are made by frying various kinds of food substrates in hot oil. Fried foods include non-coated fried foods but mostly coated fried foods that are prepared by frying food with a coating applied thereon and have a fried coating around the food. Upon cooking a coated food in high-temperature oil, the coating in direct contact with the frying oil produces a distinctive crisp texture and flavor, while the food inside is cooked as if it is steamed within the coating to have a condensed taste. Fried foods include a very large variation and are widely popular.

A coating material used to make a fried food is usually in a powder form at ambient temperature and pressure. Coatings are classified into a few types according to the form applied to a food substrate, typically including a powder coating in which a food substrate is dredged and a liquid coating called a batter, which is prepared by mixing a powder with a liquid and applied to a substrate. A battered substrate may further be coated with a powder, such as panko crumbs. There are many choices in making fried foods, such as the type of the coating, the thickness and amount of the coating to be applied, and the mass balance between the coating and the substrate to be coated.

A fried food has the problem that the water content of the substrate migrates to the coating with time after the cooking and, consequently, the food loses juiciness, and the coating gets soggy and loses its characteristic crisp texture. In response to the recent diversity of eating habits, ready-made, fried food products are distributed and sold so that consumers can buy and eat as such or as reheated, e.g., in a microwave oven. Because a relatively long time is required between the preparation of such ready-made, fried food and the eating, deterioration of coating qualities ascribed to the water content migration is often problematic. In particular, when the fried food is reheated in a microwave oven to be served, the water content of the substrate is liable to be evaporated by the microwaves and move to the coating, which worsens the coating qualities. In the case where the coating includes a batter, because the amount of the coating relative to the substrate tends to be relatively large, the role of the coating in the texture of fried food is apt to increase, and the deterioration of qualities of the coating with time caused by the water content migration is liable to become problematic.

To address these problems, various techniques for improving the coating material have been proposed. For example, patent literature 1 below discloses a batter for deep-frying containing 50 to 90 parts by mass of resistant dextrin as a solid ingredient per 100 parts by mass of a total solids content of the batter. However, the coating of fried food made by using a batter with such a high resistant dextrin content is liable to have a sticky texture, failing to provide a crisp texture. Patent literatures 2 to 4 below disclose batters for fried food containing high-amylose starch having an amylose content of 50% or more. The texture of the coating of fried food cooked by using any of these batters is not still good enough.

### Citation List

### Patent Literature

Patent literature 1: JP 2008-136445A
Patent literature 2: JP H8-173073A
Patent literature 3: JP H11-46711A
Patent literature 4: JP 2000-73A

### Summary of Invention

In recent years, the health issue associated with excessive intake of calories and carbohydrates (carbs), and lack of exercise are often raised, and there is a tendency among consumers to avoid relatively high-calorie high-carb foodstuffs, such as fried food. Low-carb fried food has been demanded on the background of such health consciousness. Dietary fiber, which is a foodstuff indigestible and unabsorbable after ingestion, has been attracting attention more recently, and foodstuffs containing dietary fiber in place of carbs, such as starch, have been proposed. For example, the high amylose starch contained in the batters for deep-frying disclosed in patent literatures 2 to 4 has a dietary fiber content of about 20% to 30%. Nevertheless, that level of the dietary fiber content cannot be claimed to be sufficient as a healthy foodstuff. On the other hand, incorporating dietary fiber in large quantities into food leads to reduction in texture and palatability because dietary fiber has peculiar taste and smell. A coating material for fried food that is prevented from deteriorating in qualities with time after cooking and responds to health conscious consumers has not yet been provided.

An object of the present invention is to provide a mix for fried food, the mix being rich in dietary fiber and therefore beneficial as a healthy low-carb foodstuff and yet capable of making a fried food with the coating of which has a non-sticky, brittle, and crisp texture and also maintains such a pleasant texture for a certain period of time after the cooking or when reheated, e.g., in a microwave oven.

The invention provides a mix for fried food containing 20 mass% or more of a high-fiber resistant starch having a dietary fiber content of 60 mass% or more.

The invention also provides a batter containing 100 parts by mass of the mix for fried food of the invention and 100 to 1000 parts by mass of a liquid.

The invention also provides a method for making a fried food including the steps of coating a food substrate with a batter containing 100 parts by mass of the mix for fried food of the invention and 100 to 1000 parts by mass of a liquid to a food substrate and cooking the coated food substrate.

### Description of Embodiments

The high-fiber resistant starch that is incorporated into the mix for fried food according to the present invention (hereinafter simply referred to as "the mix of the invention") is a type of resistant starches that are neither digested nor absorbed in the digestive tract of healthy humans. The high-fiber resistant starch for use in the invention is characterized by having a dietary fiber content of at least 60 mass%. When a mix containing resistant starch having a dietary fiber content less than 60 mass% is used as a coating material, the coating of the resulting fried food does not have a pleasant crisp texture but a sticky texture. The dietary fiber content of the high-fiber resistant starch is preferably 70 mass% or more, more preferably 80 mass% or more.

As used herein, the term "dietary fiber content" refers to a value obtained by the enzymatic-gravimetric method (Prosky method) based on the AOAC 985.29 method. The dietary fiber content can be measured using a commercially available measurement kit (e.g., a dietary fiber assay kit available from Wako Pure Chemical Corp.).

Resistant starch is a type of insoluble dietary fibers that is resistant to digestive enzymes, and is known to be assimilated by enterobacteria in the large intestine to exert a beneficial influence on the bacterial flora. Resistant starch is categorized into the following four types, RS1 to RS4.
- RS1 - Resistant starch that is *per se* digestible but has resistance to digestion is physically inaccessible to digestive enzymes because it is protected by integument and the like. Mostly found in whole grains, seeds, and legumes.
- RS2 -Native starch that is resistant to digestion due to a specific crystal structure of the grains, such that found in potatoes and unripe bananas. High amylose starch is also categorized in RS2 because of its high amylose (linear) content. As used herein, the term "high amylose starch" refers to starch having an amylose content of 50 mass% or higher.
- RS3 - Resistant starch that has resistance to digestion as a result of the change into a structure inaccessible to digestive enzymes due to retrogradation, such as retrograded starch obtained by once gelatinizing starch by heating and then cooling.
- RS4 - Resistant starch that exhibits resistance to digestion as a result of chemical modification to a high degree, such as highly crosslinked starch, etherified starch, and esterified starch.

Any one or a combination of two or more of RS2, RS3, and RS4 may be used as a high-fiber resistant starch in the invention. A high-fiber resistant starch RS2 is particularly preferred. A mix for fried food containing a high-fiber resistant starch RS3 can provide a fried food with a hard coating texture. A mix containing a high-fiber starch RS4 can provide a fried food with a sticky coating texture. Such inconveniences hardly occur with the use of the high-fiber resistant starch RS2.

The high-fiber resistant starch used in the present invention may be either native (unmodified) or modified as long as it has a dietary fiber content of at least 60 mass%. Nevertheless, most of native resistant starches generally have a dietary fiber content short of 30 mass% at the highest and are often unsuitable for use in the invention. On the other hand, resistant starches RS2 which have been heated have an increased dietary fiber content as a result of the heating and are therefore useful as a high-fiber resistant starch in the invention. For example, high amylose corn starch with an amylose content of 70 mass% has a dietary fiber content of only about 20 mass% as it is native (before heating) but increases the dietary fiber content to about 60 mass% upon being wet heated. Thus, wet-heated high amylose starch (i.e., resistant starch RS2) is useful as a high-fiber resistant starch in the invention.

Commercially available resistant starches may be used as a high-fiber resistant starch in the present invention. Examples for RS2 include Nisshoku Lodestar available from Nihon Shokuhin Kako Co., Ltd., High Maize 1043 from Japan NSC Corp., and Actistar 11700 from Cargill Japan Ltd. Examples forRS4 include Pine Starch RT and Fiber Gym RW both from Matsutani Chemical Industry Co., Ltd. and Actistar RT 75330 from Cargill Japan Ltd.

The content of the high-fiber resistant starch in the mix for fried food of the present invention is 20 mass% or higher, preferably 20 to 95 mass%, more preferably 30 to 90 mass%, even more preferably 50 to 85 mass% based on the total mass of the mix. A mix for fried food having a high-fiber resistant starch content lower than 20 mass% not only provides fried food the coating of which has a reduced brittle and crisp texture and an increased sticky texture but cannot be said to be a foodstuff featuring high-fiber and low-carb.

Where needed, the mix for fried food of the present invention may contain, in addition to the resistant starch, other ingredients commonly used in the preparation of mixes for fried food. Examples of other ingredients include cereal flours, such as wheat flour, barley flour, and rice flour; starches other than the resistant starch, including native starches, such as corn starch, waxy corn starch, tapioca starch, potato starch, wheat starch, and rice starch, and modified starches obtained by subjecting these native starches to at least one modification treatment, such as oiling, pregelatinization, etherification, esterification, crosslinking, and oxidation; seasoning agents, such as sugars, edible salt, and powdered soy sauce; fats and oils, powdered emulsifying agents, thickening agents, proteins, and leavening agents. These other ingredients may be used either individually or in combination of two or more thereof. The total amount of the other ingredients is preferably 80 mass% or less, more preferably 70 mass% or less, based on the total mass of the mix.

The mix for fried food of the present invention has a powder form at ambient temperature and pressure. In making a fried food, the mix may be applied to the surface of a substrate as such or be mixed with a liquid to prepare a batter, which is applied to a food substrate. High effects will be obtained when the mix is used in the form of a batter. That is, the mix for fried food of the present invention is preferably used in such a manner that it is mixed with a liquid to prepare a batter, which is to be applied to a food substrate. While water is commonly used as a liquid to prepare a batter, other liquids, including milk, stock, and broth, may also be used. These liquids may be used either individually or in combination of two or more thereof. The amount of the liquid mixed with the mix for fried food of the present invention to prepare a batter may be decided as appropriate according to the substrate to be coated and fried, but is preferably 100 to 1000 parts, more preferably 100 to 500 parts, even more preferably 110 to 350 parts, by mass per 100 parts by mass of the mix. The present invention includes in its scope a batter containing 100 parts by mass of the mix of the invention and 100 to 1000 parts by mass of a liquid and a method for making a fried food including the steps of coating a food substrate with the batter and cooking the coated substrate.

According to the cooking method of the invention for making fried food, the mix of the invention is applied as such or in the form of a batter to at least one part of the surface of a food, and, if desired, the coated food is further coated with panko crumbs, a breading mix, or the like, and fried to make a fried food. The invention is applicable to cooking a wide variety of fried foods. It is suited to make tempura, fritters, breaded fried food, and flour-coated fried food, particularly tempura and fritters. Food substrates to be cooked are not particularly limited and include meats, such as chicken, pork, beef, mutton, and chevon; fishes and shellfishes, such as squids, shrimps, prawns, and horse mackerels; and vegetables. If necessary, the food substrate may be seasoned and/or dredged in flour before being coated with the mix of the invention or the batter of the invention.

### Examples

The invention will now be illustrated in greater detail with reference to Examples, but it should be understood that the invention is not deemed to be limited thereto. Unless otherwise noted, all the percents and parts are given by mass.

### Examples 1 to 8 and Comparative Examples 1 to 7

The raw materials shown in Tables 1 and 2 below were mixed in the ratios shown to prepare mixes for fried food. The raw materials used are as follows.
- Resistant starch A (dietary fiber content: 85%): Novelose W, available from Ingredion Inc.
- Resistant starch B (fiber content: 60%): Nisshoku Lodestar available from Nihon Shokuhin Kako Co., Ltd.
- Resistant starch C (fiber content: 55%): Amylogel HB-450 from Sanwa Starch Co., Ltd.
- Resistant starch D (fiber content: 20%): high amylose corn starch
- Resistant dextrin (fiber content: 90%): Fibersol-2 from Matsutani Chemical Industry Co., Ltd.
- Starch (fiber content: 0%): corn starch

### Test Example

A hundred parts of each of the mixes prepared above was mixed with 160 parts of water by lightly stirring to prepare a tempura batter. Tail-on shrimps each weighing 20 g were peeled, patted dry, dredged in flour, and dipped in the batter to be coated thoroughly, and deep-fried in hot oil at 170°C for 2.5 minutes to make shrimp tempura, a type of fried food. The shrimp tempura was eaten right away by a panel of 10 members and evaluated for the texture based on the following scoring standard. Furthermore, the tempura was left to stand at room temperature for 4 hours after the cooking and reheated in a microwave oven (600 W) for 10 seconds. The reheated shrimp tempura was eaten and evaluated for the texture by the panel according to the scouring standard below. The results of evaluation are shown in Tables 1 and 2.

### Scouring standard for texture evaluation:

5: Very good. The coating is not too hard, not sticky, and nicely brittle-crisp.
4: Good. The coating is not too hard, not sticky, and brittle-crisp.
3: Fair. The coating is little hard and little sticky but slightly lacking in brittle crispness.
2: Poor. The coating is hard or sticky and lacking in brittle crispness.
1: Very poor. The coating is too hard or very sticky with no brittle crispness.

**Table 1**

| | | Example | | Comparative Example | | | | | |
|---|---|---|---|---|---|---|---|---|---|
| | | 1 | 2 | 1 | 2 | 3 | 4 | 5 | 6 |
| Composition of Mix (%) | Resistant Starch A (fiber content: 85%) | 50 | - | - | - | - | - | - | - |
| | Resistant Starch B (fiber content: 60%) | - | 50 | - | - | - | - | - | - |
| | Resistant Starch C (fiber content: 55%) | - | - | 50 | - | - | - | 50 | - |
| | Resistant Starch D (fiber content: 20%) | - | - | - | 50 | - | - | - | 50 |
| | Resistant Dextrin (fiber content: 90%) | - | - | - | - | 50 | - | 50 | 50 |
| | Starch (fiber content: 0%) | 50 | 50 | 50 | 50 | 50 | 100 | - | - |
| | Total | 100 | 100 | 100 | 100 | 100 | 100 | 100 | 100 |
| Evaluation of Shrimp Tempura | Texture Immediately after the Cooking | 4.3 | 4.6 | 3.1 | 3.0 | 2.5 | 2.8 | 2.9 | 2.8 |
| | Texture after Reheating | 4.5 | 3.8 | 2.3 | 2.6 | 1.8 | 2.2 | 2.1 | 1.7 |

As shown in Table 1, the mixes of Examples, which contain a resistant starch with a fiber content of 60% or more as a main ingredient, provide fried foods having a satisfactory texture whether they are eaten immediately after cooking or after reheating as compared with those of Comparative Examples, which do not contain a resistant starch with a fiber content of 60% or more. It is also seen from the results of Comparative Example 3 that a mix mainly containing an ingredient with a fiber content of 60% or higher, the ingredient being not resistant starch but resistant dextrin, fails to produce the effect as desired.

**Table 2**

| | | Example | | | | | | | Compara. Example 7 |
|---|---|---|---|---|---|---|---|---|---|
| | | 3 | 4 | 2 | 5 | 6 | 7 | 8 | |
| Composition of Mix (%) | Resistant Starch B (fiber content: 60%) | 20 | 30 | 50 | 85 | 90 | 95 | 100 | 15 |
| | Starch (fiber content: 0%) | 80 | 70 | 50 | 15 | 10 | 5 | - | 85 |
| | Total | 100 | 100 | 100 | 100 | 100 | 100 | 100 | 100 |
| Evaluation | Texture Immediately after the Cooking | 3.7 | 4.2 | 4.6 | 4.4 | 4.2 | 3.8 | 3.4 | 2.9 |
| | Texture after Reheating | 3.3 | 3.5 | 3.8 | 3.9 | 4.0 | 4.2 | 4.3 | 2.3 |

It is seen from the results in Table 2 that the preferred content of the high-fiber resistant starch in the mix for fried food is 20% or higher as in Examples. With the view of improving the texture of fried food immediately after the cooking, the high-fiber resistant starch content is preferably about 30 to 90%, more preferably about 50 to 85%. On the other hand, the higher the high-fiber resistant starch content, the better the texture after reheating. It is thus seen from these results that adjusting the content of the high-fiber resistant starch as appropriate to the end use of fried food is effective in improving the texture.

### Industrial Applicability

The present invention provides a mix for fried food that is rich in dietary fiber and therefore beneficial as a healthy low-carb foodstuff and yet enables making fried food with the coating of which has a non-sticky, brittle, and crisp texture and also maintains such a nice texture even after an elapse of a certain period of time from the cooking or when reheated, e.g., in a microwave oven.

## Claims

1. A mix for fried food comprising 20 mass% or more of a high-fiber resistant starch having a dietary fiber content of 60 mass% or higher.

2. The mix according to claim 1, wherein the high-fiber resistant starch has a dietary fiber content of 70 mass% or higher.

3. The mix according to claim 1 or 2, being used as mixed with a liquid.

4. A batter comprising 100 parts by mass of the mix for fried food according to any one of claims 1 to 3 and 100 to 1000 parts by mass of a liquid.

5. A method for making a fried food comprising coating a food substrate with a batter comprising 100 parts by mass of the mix for fried food according to any one of claims 1 to 3 and 100 to 1000 parts by mass of a liquid and cooking the coated food substrate.
